# NEW EUROPEAN PATENT SPECIFICATION

(11) **EP 2 705 758 B2**
(45) Date of publication and mention of the opposition decision: **15.01.2020**
(45) Mention of the grant of the patent: 28.12.2016
(21) Application number: 13005599.9
(22) Date of filing: 01.04.2010
(51) Int. Cl.: A23G 1/18, A23G 1/00

(54) **APPARATUS FOR CONTINUOUS TEMPERING OF CHOCOLATE MASS**
Vorrichting zum kontinuierlichen Temperieren von Schokoladenmasse
Appareil pour le conditionnement thermique continu de masses de chocolat

(43) Date of publication of application: 12.03.2014
(62) Divisional of application: 12075091.4
(73) Proprietor: Aasted ApS, 3520 Farum (DK)
(72) Inventor: Holmud, Dennis, 2860 Søborg (DK); Haslund, Henning, 4632 Bjæverskov (DK)
(74) Representative: Heiden, Finn

(56) References cited:
- EP-A1- 0 872 187
- EP-A1- 0 893 066
- EP-A1- 0 947 140
- EP-A1- 1 425 975
- EP-A1- 1 566 104
- EP-A1- 1 616 487
- EP-A2- 1 050 214
- EP-A2- 1 249 174
- WO-A1-01/06863
- WO-A1-92/00015
- DE-A1- 2 602 877
- DE-A1- 10 329 177
- DE-B- 1 073 287
- DE-C- 848 147
- FR-A- 1 163 921
- GB-A- 826 502

## Description

The present invention concerns an apparatus for continuous tempering of fat-containing, crystallisable chocolate mass, comprising a tempering column with a cooling section and mixing means being part of final sections of the tempering column, a channel connected with its inlet and outlet to the side of the tempering column, so that the inlet is connected to the cooling section and the outlet is connected to the final sections.

Generally, the chocolate mass, that is continuously tempered by the apparatus according to the invention encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

However, for the continuous tempering to be performed, it is decisive, that whether the fat phase constitutes of genuine cocoa butter or substitutes, the fat phase must be capable of crystallizing into stable crystal types when the mass solidifies, such as the βV-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

Optimal is then, when the type of crystals are stable βV-crystals only. The content thereof in the ready tempered chocolate mass shall be at a desired content- for example of 1,0 % for a specific production. Only then the manufacturer can rely on that the quality of his chocolate products are always the same.

Before the chocolate mass is supplied to perform the actual tempering process by running continuously through the tempering apparatus, the mass is heated to around 40-50°C in a premature step. Then essentially all the crystals in the chocolate mass are melted. The premature step is typically arranged distant to the tempering apparatus as the mass is heated in a storage tank. However, a heating step could also be arranged in the tempering apparatus in front of the cooling stage.

By the prior art tempering process the chocolate mass is being cooled to around 29-34°C in the cooling stage, so that crystals are very close to be created. Thereafter the mass passes through the crystallisation stage in which the temperature of the mass is typically lowered to 26-30°C. The mass and the heat-exchanging surfaces of the crystallisation stage is so cold, that crystals are created in the mass. The cool-ing water temperature is generally set to 10-14°C by the tempering apparatus at the market today. The approximate temperature of the heat-exchanging surfaces of the crystallisation stage is advised to be below 18°C, so that crystal creation ("impfning") is performed at the cooling surfaces and not in the mass. Thereafter, the mass is conditioned and the crystals are mixed out through the mass. By conditioning means that creation and development of new crystals in the mass proceed. The temperature is also raised 0,5-2,0°C in the conditioning and mixing stage. The purpose is to melt out as many as possible of the in-stable crystals, which unavoidably are created at the cold surfaces of the crystallisation stage. Desirable is to preserve a content of stable βV-crystals only, by trying to melt up the in-stable crystals, which melt at lower temperatures than the stable βV-crystals. The stable βV-crystals are preserved in the mass in an amount of typically 0,01% - 5%, preferably in an amount of 0,1% - 2%.

Apparatuses for performing the above continuous tempering methods have dominated the market for many years. Though the cold surfaces of the cooling and crystallisation stages have made the machines smaller in their physical size, they are however still large and expensive, especially when bigger amounts of mass shall be continuously tempered, i.e. more than 500kg/hour. The principle with the cold surfaces of the crystallisation stage also creates a huge amount of in-stable crystals, which very often makes it difficult to achieve the desirable, highest possible quality of the moulded product, especially in terms of shelf-life. This is because it is time consuming and energy consuming to remove in-stable crystals entirely during the final conditioning or reheating stage. The tempering columns of the apparatus would simply be to big and expensive if the conditioning stages should have sufficient capacity to achieve total re-melting of in-stable crystals. When mass with high fat content is tempered, then the amount of in-stable crystals created is also high. Then, the problem is even more exaggerated when chocolate with high fat content such as milk chocolate, white chocolate, nougat or filling mass for pralines are tempered.

A given size of a tempering machine at the market has a fixed length and consequently fixed areas for cooling, crystallisation and reheating.
Due to the above described problematic of continuous tempering of masses with a high fat content, it is well-known today, that the maximum capacity measured in kilograms per hour of tempered mass of a given tempering machine of the ones at the market is lowered severely when recipes with a high fat content are tempered. The maximum capacity is achieved when tempering dark chocolate having a fat content between 20-34%. In comparison herewith the capacity is typically lowered around 20% when milk chocolate, compound chocolate, nougat or other mass with a fat content between 30% and 40% is tempered.
When high fat recipes having fat content between 40% and 100% are tempered, the maximum capacity is lowered up to 50%.
A major disadvantage is then a very high energy consumption, firstly for cooling down the total mass and secondly for reheating the mass. Also the energy requirements are high for the chocolate pumps and the gear motors of the tempering machines.

EP 1616487 A1 (Sollich) discloses a tempering apparatus by which already tempered mass is recirculated to the mixing or conditioning stage or to the crystallisation stage for upgrading the concentration of crystals in the mass. However the crystal content may be difficult to control exactly to a desired level.

EP 1180941 A1 discloses a method and an apparatus by which a seed suspension having a content of beta VI crystals is prepared by use of a high shear crystalliser, with or without the addition of crystal powder. The seed suspension is subsequently mixed in a content of 0,01% - 0,2% with a main stream of a crystal free mass such as for example a filling mass with a content of oils derived from nuts.
The challenge of this prior apparatus seems to be, that the mixing has to be very intensive and thoroughly for the resultant mass to be sufficiently homogenous. Also the method is very time consuming as it takes at least 11/2-2 hours for the seed suspension to be created and the equipment is expensive. Furthermore, is the added seed powder very expensive as it is based on cocoa butter-fat.

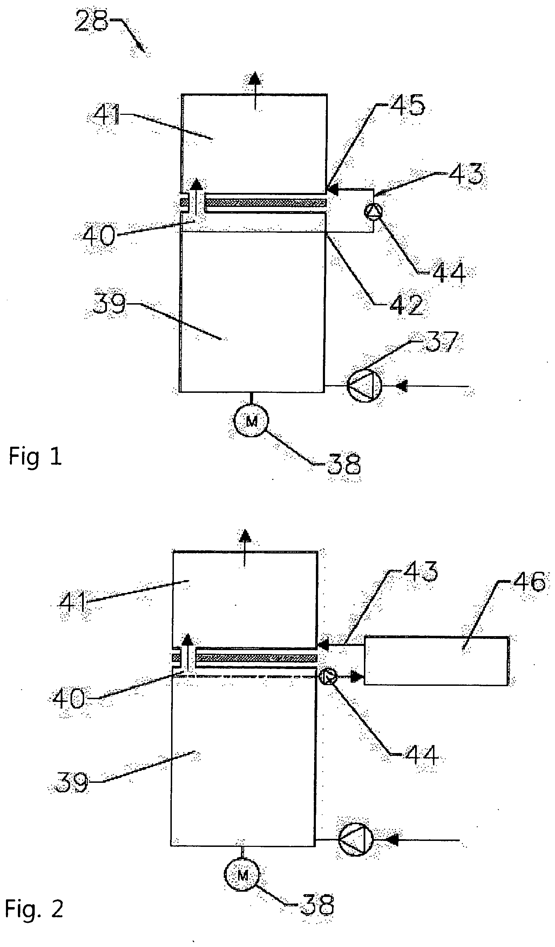

EP 1249174 A1 discloses an apparatus comprising a traditional tempering column having a cooling stage and a mixing stage, however no crystallization stage. The creation of crystals (Impfkristalle) and the ready-making (Aufbereitung) of the chocolate mass are separated. The crystals are pre-made and are added to the apparatus via a funnel arranged in an open tube connected with its inlet to the end of the cooling stage and its outlet to the beginning of the mixing stage, (fig.2). The tube provides a circuit into which the pre-crystallised mass is added into a stream of mass. The mass having crystals added is via the tube returned to the mixing stage and mixed with the remaining mass from the cooling stage.

According to the invention, the apparatus comprises that a crystallisation section is arranged between the cooling section and the final sections, and that the channel is a conduit adapted for by-passing a second stream of mass outside the crystallisation section, so that the mass is divided into a first stream of mass and a second stream of mass, crystals are created in the first stream of mass, and so that the second stream of mass is still being free from crystals, and the first stream of mass and the second stream of mass is mixed together into one final crystallised stream of mass by the mixing means being part of the final sections. The apparatus is defined in claim 1.

The apparatus configuration makes it possible to crystallise only a smaller part of the total mass. The necessary cooling energy is then lowered as well as the energy requirements for electric gear motor and chocolate pumps. The cooling surfaces of the tempering apparatus is lesser than of that by the prior art machines for producing the same total amount of crystallised mass. The total energy requirements for the complete apparatus is then also lowered in comparison with the prior art machines for producing the same amount of tempered mass. The inventive apparatus can then be produced smaller in size. A very high desirable quality with diminishing content of in-stable crystals is achievable without using any "seed" technique by which expensive cocoa butter has to be crystallised separately and added to the particular mass.

It is especially advantageous when the apparatus is adapted to divide between 5% to 40% of the total mass into the first stream of mass and the rest into the second stream of mass. Then, the appropriate size of cooling surfaces and cooling capacity in the crystallisation stage is much lesser than when 100% of mass has to be crystallised. The apparatus may then be made especially small and the energy consumption is lowered severely for the apparatus, i.e. up to 70%.

Tests has shown, that when the amount of the first stream of mass is between 10% and 30% of the amount of the final stream of mass, the highest possible capacity of mass is achieved for a fixed configuration of an apparatus. The energy savings are also among the greatest. The totally consumed energy for apparatus is measured to between 7,7 W/Kg/hour and 9,2 W/Kg/hour tempered dark chocolate mass or milk chocolate mass. In comparison herewith the totally consumed energy for prior art apparatuses was measured to 20-25 W/Kg/hour at the same conditions. The maximum tempered amount was between 1400 kg and 1800 kg per hour.

A great advantage is also, that all the equipment of the apparatus is well-known components. For example may the tempering unit, the tanks, and the mixers be of known types commercially available at the market.

The invention is further described by referring to the drawing, in which
figure 1 schematically discloses an apparatus according to the invention,
figure 2 another embodiment of figure 1,
figure 3 discloses schematically in vertical section one embodiment of the inner chambers of the apparatus of figure 1 or 2, and
figure 4 discloses schematically another embodiment of the inner chambers according to figure 3.

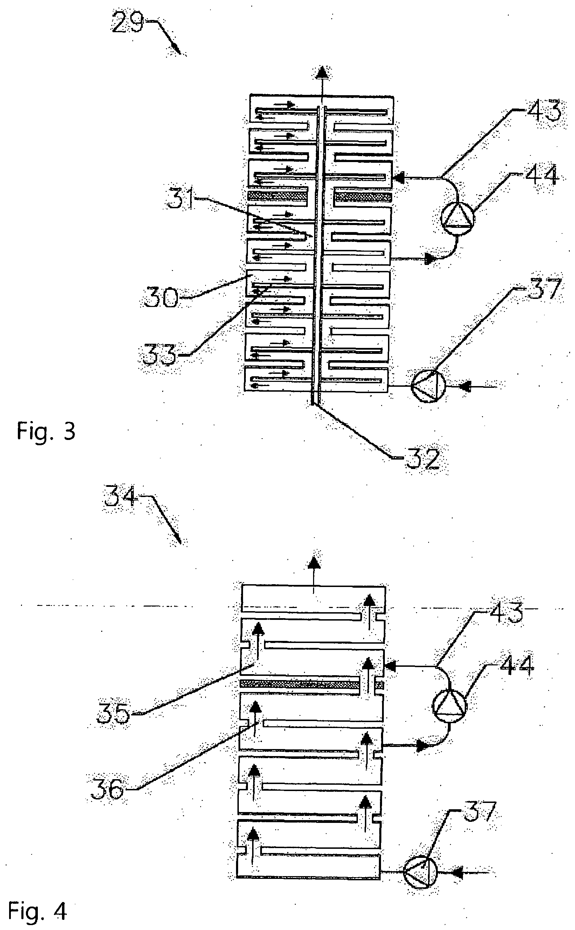

In figure 1 is disclosed an inventive embodiment of a tempering apparatus. The apparatus 28 constitutes of a tempering column of well-known type such as the one disclosed in figure 3 or in figure 4.

The tempering column 29 schematically disclosed in figure 3 is build up by discs chambers 30 for the chocolate and intermediary chambers for the water, which are not disclosed as they are not part of the inventive idea. All the chocolate chambers 30 are interconnected by central ring-shaped openings 31. A central shaft 32 is connected with stirring tools 33 arranged in each chocolate chamber 30.

The tempering column 34 schematically disclosed in figure 4 is build up by discs chambers 35 for the chocolate and intermediary chambers for the water. All the chocolate chambers 35 are interconnected by openings 36 arranged at the periphery. A central shaft is connected with stirring tools arranged in each chamber as in figure 3.

Via a pump 37 the chocolate mass is pumped continuously through the column 28 in figure 1 and as disclosed more detailed in figure 3 or in figure 4. A motor 38 turns the shaft 32 and the stirring tools 33 typically with 25-50 revolutions per minute.

The tempering apparatus 28 in figure 1 has a cooling section 39, a crystallisation section 40 and a mixing and conditioning section 41. Between the cooling section 39 and the crystallisation section 40 is arranged the inlet 42 to a conduit 43 with a pump 44. The outlet 45 of the conduit is connected with the mixing section 41.

The mass is pumped from the non-disclosed tank having a temperature of 40-50°C by the pump 37 into the cooling section 39 of the tempering column 28. In the cooling section 39 the temperature of the mass is lowered so much that it is close to the temperature at which crystals can be created, however it is still free from any crystals in the mass. The pump 44 pumps the desired amount of the second stream of mass out of the tempering column and into the conduit 43. From the by-passing conduit the second stream of mass enters via the inlet 45 into the mixing section 41, still being free from crystals. The first stream of mass flow through the crystallisation section 40 at which crystals are created in the mass. From there the first stream of mass flow into the mixing section 41 and mixes up with the second stream of mass, so that the crystals are homogenously distributed out through the final mass.

At one production test with dark chocolate a continuous amount of 1000 kg/hour is delivered from the apparatus 28. Approximately 90% of the dark chocolate is by-passed in the conduit 43, meaning that this amount of chocolate is not being crystallised in the crystallisation section 40. Well-tempered dark chocolate is delivered continuously from the apparatus. The tempering index is flat and sharp in the region of 4,7-5,3, which is extremely well in comparison with the results achievable for the prior known apparatus. The total energy consumption for the apparatus is measured, both in terms of cooling energy from cold water as well as the consumption of all electrical components and pumps. The result is that 40% of the total energy consumption is saved in comparison with a prior tempering apparatus for delivering the same amount of 1000 kg/hour of well-tempered dark chocolate.

At another production test well-tempered milk chocolate is continuously delivered in an amount of 1000 kg/hour. Approximately 75% of the milk chocolate is by-passed in the conduit 43, so that this amount is not crystallised in the crystallisation section 40. The tempering index is in the region of 4,5 - 5,4, which is impressive.
The total energy consumption for the apparatus was measured, both in terms of cooling energy from cold water as well as the consumption of all electrical components and pumps. The result is that 55% of the total energy consumption is saved in comparison with a prior tempering apparatus for delivering the same amount of 1000 kg/hour of well-tempered milk chocolate. The total consumed energy amount was 35 KW/hour for continuously tempering 1000kg/hour milk chocolate with the traditional tempering machine. With the machine according to the invention, the total consumed energy amount was 10 KW/hour for continuously tempering the same mass and the same amount per hour.

The result of the high savings in total energy consumption for the apparatus is astonishing and a great advantage for the producer, especially for factories which has many tempering machines.

The embodiment disclosed in figure 2 is identical to the embodiment 28 disclosed in figure 1 apart from a further cooler 46 arranged in the conduit 43. Hereby is obtained a finer control with the temperature of the by-passed stream of mass before it enters into the mixing section 41. This is an advantage when the mass type dictates very accurate temperature control in the region at which no crystals are created. The crystals of the first stream of mass survive and increase further crystallisation in the mixing section 41.

## Claims

1. Apparatus (28, 29, 34) for continuous tempering of a fat-containing, crystallisable chocolate mass, comprising a tempering column (28, 29, 34) with a cooling section (39) and mixing means (33) being part of final sections (41) of the tempering column (28, 29), a channel (43) with a pump (44) connected with its inlet (42) and outlet (45) to the side of the tempering column,
so that the inlet (42) is connected to the cooling section (39) between the cooling section and the crystallisation section and the outlet (45) is connected to the final sections (41),
**characterised in,**
**that** a crystallisation section (40) is arranged between the cooling section (39) and the final sections (41), and that the channel is a conduit (43) adapted for by-passing a second stream of mass outside the crystallisation section (40),
so that the mass is divided into a first stream of mass and a second stream of mass, crystals are created in the first stream of mass, and so that the second stream of mass is still being free from crystals, and the first stream of mass and the second stream of mass is mixed together into one final crystallised stream of mass by the mixing means being part of the final sections (41).

2. Apparatus according to claim 1, **characterised in, that** a pump (44) is arranged in the conduit (43).

3. Apparatus according to claim 1, **characterised in, that** a cooler 46 is arranged in the conduit 43.

## Patentansprüche

1. Vorrichtung (28, 29, 34) zum kontinuierlichen Temperieren einer fetthaltigen, kristallisierbaren Schokoladenmasse, umfassend eine Temperiersäule (28, 29, 34) mit einer Kühlstufe (39) und Mischmitteln (33), die Teil von Endstufen (41) der Temperiersäule (28, 29) sind, einen Kanal (43) mit einer Pumpe (44), der mit seinem Einlass (42) und Auslass (45) mit der Seite der Temperiersäule verbunden ist,
so dass der Einlass (42) mit der Kühlstufe (39) zwischen der Kühlstufe und der Kristallisierstufe verbunden ist und der Auslass (45) mit den Endstufen (41) verbunden ist,
**dadurch gekennzeichnet,**
**dass** eine Kristallisierstufe (40) zwischen der Kühlstufe (39) und den Endstufen (41) angeordnet ist und dass der Kanal eine Leitung (43) ist, die geeignet ist, einen zweiten Strom von Masse außerhalb der Kristallisierstufe (40) vorbeizuführen,
so dass die Masse in einen ersten Strom von Masse und einen zweiten Strom von Masse unterteilt wird und Kristalle im ersten Strom von Masse erzeugt werden und so dass der zweite Strom von Masse immer noch frei von Kristallen ist, und der erste Strom von Masse und der zweite Strom von Masse durch die Mischmittel, die Teil der Endstufen (41) sind, miteinander zu einem abschließenden kristallisierten Strom von Masse vermischt werden.

2. Vorrichtung nach Anspruch 1, **dadurch gekennzeichnet, dass** eine Pumpe (44) in der Leitung (43) angeordnet ist.

3. Vorrichtung nach Anspruch 1, **dadurch gekennzeichnet, dass** ein Kühler (46) in der Leitung (43) angeordnet ist.

## Revendications

1. Appareil (28, 29, 34) pour le conditionnement thermique en continu d'une masse de chocolat cristallisable contenant des matières grasses, comprenant une colonne de conditionnement thermique (28, 29, 34) avec une section de refroidissement (39) et des moyens de mélange (33) faisant partie de sections finales (41) de la colonne de conditionnement thermique (28, 29), un canal (43) avec une pompe (44)connecté par son entrée (42) et sa sortie (45) au côté de la colonne de conditionnement thermique,
de telle sorte que l'entrée (42) soit connectée à la section de refroidissement (39) entre la section de refroidissement et la section de cristallisation et que la sortie (45) soit connectée aux sections finales (41),
**caractérisé en ce**
**qu'**une section de cristallisation (40) est disposée entre la section de refroidissement (39) et les sections finales (41), et **en ce que** le canal est un conduit (43) prévu pour contourner un deuxième flux de masse à l'extérieur de la section de cristallisation (40),
de telle sorte que la masse soit divisée en un premier flux de masse et un deuxième flux de masse, des cristaux étant créés dans le premier flux de masse, et de telle sorte que le deuxième flux de masse soit toujours exempt de cristaux, et que le premier flux de masse et le deuxième flux de masse soient mélangés ensemble dans un flux de masse final cristallisé par les moyens de mélange faisant partie des sections finales (41).

2. Appareil selon la revendication 1, **caractérisé en ce qu'**une pompe (44) est prévue dans le conduit (43) .

3. Appareil selon la revendication 1, **caractérisé en ce qu'**un refroidisseur (46) est prévu dans le conduit (43) .
